# EUROPÄISCHE PATENTSCHRIFT

(11) **EP 3 247 613 B1**
(45) Veröffentlichungstag und Bekanntmachung des Hinweises auf die Patenterteilung: **13.03.2019**
(21) Anmeldenummer: 15813870.1
(22) Anmeldetag: 22.12.2015
(51) Int. Cl.: B62D 1/28, B62D 5/04, B62D 6/00, B62D 15/02

(54) **LENKSYSTEM FÜR EIN AUTOMATISIERTES FAHREN EINES KRAFTFAHRZEUGES**
STEERING SYSTEM FOR AN AUTOMATED DRIVING PROCESS OF A MOTOR VEHICLE
SYSTÈME DE DIRECTION PERMETTANT UNE CONDUITE AUTOMATISÉE D'UN VÉHICULE AUTOMOBILE

(30) Priorität: 22.01.2015 DE 102015201032
(43) Veröffentlichungstag der Anmeldung: 29.11.2017
(73) Patentinhaber: Volkswagen Aktiengesellschaft, 38440 Wolfsburg (DE)
(72) Erfinder: SWIETER, Ingo, 38162 Cremlingen (DE)
(86) Internationale Anmeldenummer: PCT/EP2015/080938
(87) Internationale Veröffentlichungsnummer: WO 2016/116242

(56) Entgegenhaltungen:
- EP-A2- 1 508 505
- EP-A2- 1 574 419

## Beschreibung

Die Erfindung betrifft ein Lenksystem für ein automatisiertes Fahren eines Kraftfahrzeugs.

Ein solches Lenksystem ist beispielsweise aus der EP 1 508 505 B1 bekannt. Der Grundaufbau der meisten Lenksysteme zum automatisierten Fahren besteht aus einem Lenkungssteuergerät, einer Leistungselektronik, Mittel zur Einstellung eines Lenkwinkels an den Rädern und einem Elektromotor. Das Lenkungssteuergerät generiert dabei in Abhängigkeit von Daten einer Umfeldsensorik Lenkungssteuerbefehle, die durch die Leistungselektronik in Ansteuersignale für den Elektromotor umgesetzt werden, der dann die Mittel zur Einstellung eines Lenkwinkels ansteuert. Die Umfeldsensorik kann dabei beispielsweise mindestens eine Kamera oder aber eine Positionserfassungseinrichtung des Kraftfahrzeugs sein, wobei die Positionsdaten auf eine digitale Straßenkarte gematcht werden. Im Gegensatz zu den bisher bekannten Fahrerassistenzsystemen ist es dem Fahrer beim automatisierten Fahren erlaubt, die Hände vom Lenkrad zu nehmen.

Aus der US 4,653,601 A ist ein elektrisches Lenksystem bekannt, wobei eine Brennkraftmaschine einen Generator für ein Kraftfahrzeugbordnetz generatorisch antreibt. Gleichzeitig treibt die Brennkraftmaschine einen Gleichstromgenerator an, der einen Gleichstrommotor bestromt, um einen Lenkwinkel einzustellen. Dabei wird der Gleichstromgenerator durch ein Steuergerät in Abhängigkeit der Geschwindigkeit und eines erfassten Drehmoments aufgrund eines Handmoments an einer Lenkachse geregelt.

Aus der gattungsgemäßen EP 1 574 419 A2 ist ein Lenksystem bekannt, dass ein Lenkungssteuergerät, Leistungselektronik, Mittel zur Einstellung des Lenkwinkels und einen Elektromotor umfasst. Abhängig von Umgebungsinformationen erzeugt das Lenkungssteuergerät Steuerbefehle, die durch die Leistungselektronik in Signale für den Elektromotor umgewandelt werden, der wiederum die Mittel zur Einstellung eines Lenkwinkels ansteuert. Das Dokument EP 1 574 419 A2 ist als nächstliegender Stand der Technik nach dem Oberbegriff des Anspruchs 1 zu sehen.

Ein Lenksystem für ein automatisiertes Fahren muss eine erhebliche Fehlertoleranz aufweisen, wobei jedoch nicht das komplette Lenksystem redundant aufgebaut werden kann.

Der Erfindung liegt das technische Problem zugrunde, ein Lenksystem für ein automatisiertes Fahren eines Kraftfahrzeugs zu schaffen, dass eine verbesserte Ausfallsicherheit bei geringen Redundanzen der Bauteile aufweist.

Die Lösung des technischen Problems ergibt sich durch ein Lenksystem mit den Merkmalen des Patentanspruch 1. Weitere vorteilhafte Ausgestaltungen der Erfindung ergeben sich aus den Unteransprüchen.

Das Lenksystem für ein automatisiertes Fahren eines Kraftfahrzeuges weist mindestens ein Lenkungssteuergerät, eine Leistungselektronik, Mittel zur Einstellung eines Lenkwinkels und einen Elektromotor auf. Die Mittel zur Einstellung eines Lenkwinkels sind beispielsweise als Zahnstange ausgebildet, wobei der Elektromotor beispielsweise über ein Getriebe mit der Zahnstange verbunden ist. Der Elektromotor ist beispielsweise als permanenterregter Synchronmotor ausgebildet. Das Lenksystem ist derart ausgebildet, dass das Lenkungssteuergerät in Abhängigkeit der Daten einer Umfeldsensorik Lenkungssteuerbefehle generiert. Die Umfeldsensorik kann dabei als mindestens eine Kamera und/oder Positionsbestimmungseinrichtung mit einer digitalen Straßenkarte sein. Ergänzend kann die Umfeldsensorik Infrarot-, Radar-, Laser- und/oder Ultraschallsensoren aufweisen. Die Lenkungssteuerbefehle werden durch die Leistungselektronik in Ansteuersignale für den Elektromotor umgesetzt, der dann die Mittel zur Einstellung eines Lenkwinkels ansteuert. Das Lenkungssteuergerät generiert in Abhängigkeit der Daten der Umfeldsensorik einen aktuellen Lenksteuerbefehl für einen Zeitpunkt t₀ und mindestens einen zukünftigen Lenkungssteuerbefehl für einen Zeitpunkt t₁, die an die Leistungselektronik übertragen werden, wobei t₁>t₀ gilt. Die Leistungselektronik weist einen Speicher auf, in dem der mindestens eine zukünftige Lenkungssteuerbefehl abgespeichert wird. Die Leistungselektronik ist derart ausgebildet, dass bei einer Kommunikationsstörung zwischen dem Lenkungssteuergerät und der Leistungselektronik der mindestens eine zukünftige Lenkungssteuerbefehl aus dem Speicher ausgelesen und in Ansteuersignale für den Elektromotor umgesetzt wird. Dabei kann die Ursache der Kommunikationsstörung auch durch eine Störung in der Verbindung der Umfeldsensorik mit dem Lenkungssteuergerät verursacht werden. Hierdurch wird sichergestellt, dass das Lenksystem bei einer Kommunikationsstörung nicht schlagartig ausfällt, sondern noch eine gewisse Zeit arbeitet, sodass der Fahrer und/oder das Fahrzeugsystem Zeit für Gegenmaßnahmen haben.

In einer Ausführungsform weist das Lenksystem eine Warneinrichtung auf, die derart ausgebildet ist, dass bei einer Kommunikationsstörung eine Aufforderung zur Übernahme der Lenkung durch den Fahrer generiert wird. Die Aufforderung kann dabei akustisch und/oder optisch und/oder haptisch erfolgen.

In einer weiteren Ausführungsform ist ein Übernahmezeitintervall definiert, innerhalb dessen ein Fahrer die Lenkung übernehmen muss, wobei die Anzahl der zukünftigen Lenkungssteuerbefehle derart gewählt wird, dass diese einen Zeitbereich größer/gleich dem Übernahmezeitintervall abdecken. Hierdurch wird gewährleistet, dass bis zur geforderten Übernahme das Lenksystem stabil arbeitet.

In einer weiteren Ausführungsform ist mindestens einem zukünftigen Lenkungssteuerbefehl ein Zeitstempel zugeordnet, wann dieser ausgeführt werden soll. Hierdurch kann die Anzahl abzuspeichernder zukünftiger Lenkungssteuerbefehle reduziert werden, insbesondere wenn ein Lenkungssteuerbefehl über mehrere Zyklen unverändert bleibt.

In einer weiteren Ausführungsform ist das Lenkungssteuergerät derart ausgebildet, dass bei einer Übertragung von aktuellen und zukünftigen Lenkungssteuerbefehlen in einem Zyklus diese mit den Lenkungssteuerbefehlen in dem vorangegangenen Zyklus verglichen werden, wobei nur bei Abweichungen zu den bereits übermittelten Lenkungssteuerbefehlen der aktuelle und/oder zukünftige Lenkungssteuerbefehl an die Leistungselektronik übermittelt wird. Dies spart Bandbreite in der Übertragung ein.

Hinsichtlich einer verfahrensmäßigen Ausgestaltung wird vollinhaltlich auf die vorangegangenen Ausführungen Bezug genommen.

Die Erfindung wird nachfolgend anhand bevorzugter Ausführungsbeispiele näher erläutert. Die Figuren zeigen:
- Fig. 1: ein schematisches Blockschaltbild eines Lenksystems zur Darstellung der Kommunikationsverbindungen,
- Fig. 2: schematische Darstellungen von Botschaften zwischen einem Lenkungssteuergerät und einer Leistungselektronik und
- Fig. 3: ein schematisches Blockschaltbild eines Lenksystems zur Darstellung der Spannungsversorgung.

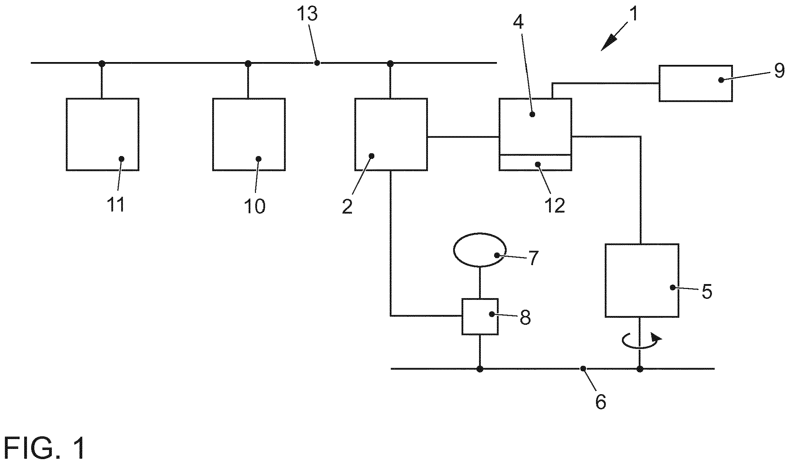

In der Fig. 1 ist ein schematisches Blockschaltbild eines Lenksystems 1 für ein automatisiertes Fahren dargestellt. Das Lenksystem 1 weist ein Lenkungssteuergerät 2, eine Leistungselektronik 4, einen Elektromotor 5 und eine Zahnstange 6 auf. Weiter weist das Lenksystem 1 eine Lenkhandhabe 7, einen Drehmomentsensor 8 und eine Warneinrichtung 9 auf. Weiter ist in Fig. 1 eine Umfeldsensorik 10 sowie ein weiteres Steuergerät 11 dargestellt. Dabei kann die Umfeldsensorik 10 Bestandteil des Lenksystems 1 sein, muss es aber nicht sein. Die Leistungselektronik 4 ist dabei mit einem Speicher 12 ausgebildet.

Das Lenkungssteuergerät 2, die Umfeldsensorik 10 sowie das weitere Steuergerät 11 sind über ein Bus-System 13 miteinander datentechnisch verbunden.

Im normalen Betrieb bringt der Fahrer über die Lenkhandhabe 7 ein Handmoment auf, das auf die Zahnstange 6 übertragen wird. Der Drehmomentsensor 8 erfasst das Handmoment und übermittelt dieses an das Lenkungssteuergerät 2. Im Lenkungssteuergerät 2 wird dann unter Berücksichtigung einer Fahrzeuggeschwindigkeit ein Unterstützungsmoment berechnet und ein entsprechendes Signal an die Leistungselektronik 4 übermittelt. Die Leistungselektronik 4 generiert dann Ansteuerströme für den Elektromotor 5, der dann das Unterstützungsmoment auf die Zahnstange 6 aufbringt. Die Fahrzeuggeschwindigkeit erhält das Lenkungssteuergerät beispielsweise durch das weitere Steuergerät 11.

Beim automatisierten Fahren muss der Fahrer hingegen die Hände nicht mehr an der Lenkhandhabe 7 haben. Vielmehr werden mittels der Daten der Umfeldsensorik 10 vorzugsweise unter Berücksichtigung der Fahrzeuggeschwindigkeit Lenkungssteuerbefehle im Lenkungssteuergerät 2 erzeugt, die dann umgesetzt werden. Dabei kann beispielsweise in dem weiteren Steuergerät 11 eine Vorverarbeitung der Daten der Umfeldsensorik 10 erfolgen, was aber nicht zwingend ist.

Mittels der Daten der Umfeldsensorik 10 wird sowohl ein aktueller Lenkungssteuerbefehl als auch zukünftige Lenkungssteuerbefehle für nachfolgende Zeitpunkte bestimmt. Der aktuelle Lenkungssteuerbefehl als auch die zukünftigen Lenkungssteuerbefehle werden dann als Botschaft an die Leistungselektronik 4 übermittelt. Dort wird der aktuelle Lenkungssteuerbefehl in Ansteuerströme für den Elektromotor 5 umgesetzt, wohingegen die zukünftigen Lenkungssteuerbefehle im Speicher 12 abgespeichert werden. Kommt es dann zu einer Kommunikationsstörung zwischen dem Lenkungssteuergerät 2 und der Leistungselektronik 4, sodass diese keine neuen Lenkungssteuerbefehle von dem Lenkungssteuergerät 2 erhält, so greift die Leistungselektronik 4 auf die abgespeicherten zukünftigen Lenkungssteuerbefehle im Speicher 12 zurück und setzt diese nacheinander in Ansteuerströme (Ansteuersignale) für den Elektromotor 5 um.

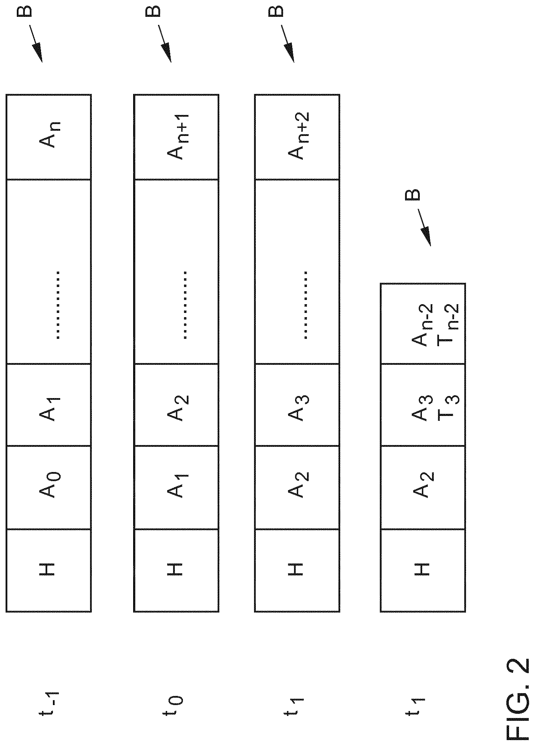

In der Fig. 2 ist schematisch der Aufbau solcher Botschaften B dargestellt. Zu einem Zeitpunkt t₋₁ erzeugt das Lenkungssteuergerät 2 einen aktuellen Lenkungssteuerbefehl A₀, der zum Zeitpunkt t₀ von der Leistungselektronik 4 unmittelbar nach Empfang umgesetzt werden soll. Weiter erzeugt das Lenkungssteuergerät 2 zukünftige Lenkungssteuerbefehle A₁-Aₙ. Diese Schätzung der zukünftigen Lenkungssteuerbefehle A₁-Aₙ kann beispielsweise aus Vorab-Informationen über den Straßenverlauf und/oder Kamerabilder erfolgen, die den vorausliegenden Straßenverlauf erfassen. Die Lenkungssteuerbefehle A₀-Aₙ werden zusammen als Botschaft B mit einem Header H an die Leistungselektronik 4 übertragen. Dort wird der Lenkungssteuerbefehl A₀ sofort in Ansteuersignale bzw. -ströme für den Elektromotor 5 umgesetzt, wobei die zukünftigen Lenkungssteuerbefehle A₁-Aₙ im Speicher 12 abgespeichert werden. Eine Takt- oder Zykluszeit später erzeugt das Lenkungssteuergerät 2 anhand der Daten der Umfeldsensorik 10 eine weitere Botschaft B zum Zeitpunkt t₀. Entsprechend verschiebt sich der Index der Lenkungssteuerbefehle A₁-Aₙ₊₁, wobei nunmehr A₁ der aktuelle Lenkungssteuerbefehl ist. Dabei sei angemerkt, dass A₁ zum Zeiptunkt t₀ nicht identisch sein muss mit A₁ zum Zeitpunkt t₋₁, da gegebenenfalls durch die aktuellen Umfeldsensorikdaten eine Modifikation der Lenkungssteuerbefehle notwendig geworden ist. Dies kann nun auch ausgenutzt werden, um die Anzahl der zu übertragenden Daten zu reduzieren, indem beispielsweise zum Zeitpunkt t₀ nur die Lenkungssteuerbefehle A₁-Aₙ₊₁ übertragen werden, die sich im Vergleich zum Zeitpunkt t₋₁ geändert haben. Entsprechend ist dann auch die Botschaft B zum Zeitpunkt t₁ aufgebaut.

Zur weiteren Reduzierung der zu übertragenen Datenmengen kann auch vorgesehen sein, dass nicht für jeden Zyklus ein separater Lenkungssteuerbefehl übertragen wird, wenn sich ein zukünftiger Lenkungssteuerbefehl über mehrere Zyklen erstreckt. In diesem Fall wird dem Lenkungssteuerbefehl ein Zeitstempel angefügt, der beispielsweise ausdrückt, ab wann dieser Lenkungssteuerbefehl durchgeführt werden soll. Dies ist beispielsweise in der untersten Botschaft B dargestellt. Dabei wird neben dem Header H und dem aktuellen Lenkungssteuerbefehl A₂ ein zukünftiger Lenkungssteuerbefehl A₃ mit einem Zeitstempel T₃ sowie ein weiterer zukünftiger Lenkungssteuerbefehl Aₙ₋₂ mit einem Zeitstempel Tₙ₋₂ übertragen. Die Leistungselektronik 4 würde dann zunächst A₂ umsetzen und anschließend zum Zeitpunkt T₃ den Lenkungssteuerbefehl A₃ solange umsetzen, bis der Zeitpunkt Tₙ₋₂ erreicht ist. Es ist leicht einsichtig, dass hiermit erheblich die Datenübertragungsmenge reduziert werden kann.

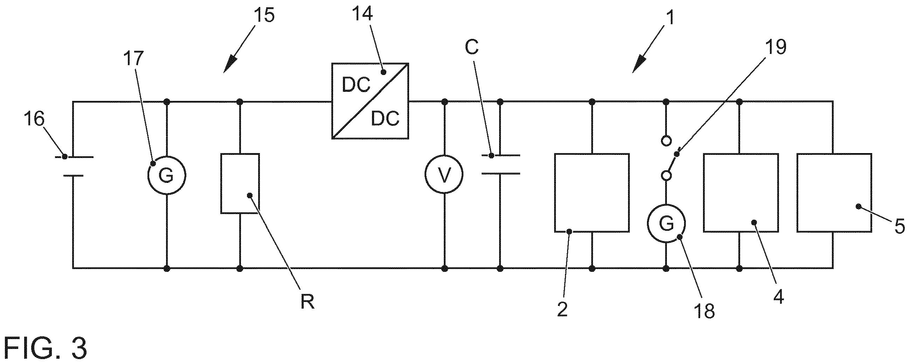

In der Fig. 3 ist ein Blockschaltbild des Lenksystems 1 dargestellt, wobei aus Übersichtsgründen die Kommunikationsstrecken nicht dargestellt sind, da es primär um die Darstellung der Spannungsversorgung geht. Das Lenksystem 1 umfasst wieder das Lenkungssteuergerät 2, die Leistungselektronik 4 sowie den Elektromotor 5. Das Lenksystem 1 ist über ein als DC/DC-Wandler ausgebildetes Koppelglied 14 mit einem Bordnetz 15 elektrisch verbunden. Das Bordnetz 15 weist eine Batterie 16, einen Generator 17 und elektrische Verbraucher R auf. Das Lenksystem 1 weist weiter eine Spannungsmesseinrichtung V, einen Glättungskondensator C sowie einen weiteren Generator 18 mit einer Kupplung 19 auf, wobei der Einfachheit halber die Kupplung 19 als Schalter dargestellt ist. Schließlich kann das Lenksystem 1 noch die Umfeldsensorik 10 sowie die Warneinrichtung 9 gemäß Fig. 1 aufweisen. Über die Kupplung 19 ist der Generator 18 mit einer nicht dargestellten Antriebsachse des Kraftfahrzeugs verbunden.

Im regulären Betrieb wird das Lenksystem 1 über den DC/DC-Wandler vom Bordnetz 15 mit Spannung versorgt und die Kupplung 19 ist offen. Bricht dann die Spannung im Bordnetz 15 zusammen, so bricht auch die Spannung am Ausgang des DC/DC-Wandlers zusammen. Dies erfasst die Spannungsmesseinrichtung V, die ein Schaltsignal für die Kupplung 19 generiert und so den Generator 18 mit der Antriebsachse verbindet. Das fahrende Fahrzeug treibt dann den Generator 18 an, der dann die Versorgungsspannung für das Lenksystem 1 liefert. Hierzu ist der Generator 18 beispielsweise mit einem nicht dargestellten Wechselrichter ausgebildet. Über den DC/DC-Wandler ist dann das Lenksystem 1 vom Bordnetz 15 entkoppelt und das Lenksystem 1 kann trotz Ausfall des Bordnetzes 15 weiterarbeiten.

## Patentansprüche

1. Lenksystem (1) für ein automatisiertes Fahren eines Kraftfahrzeugs, wobei das Lenksystem (1) mindestens ein Lenkungssteuergerät (2), eine Leistungselektronik (4), Mittel zur Einstellung eines Lenkwinkels und einen Elektromotor (5) aufweist, wobei das Lenksystem (1) derart ausgebildet ist, dass das Lenkungssteuergerät (2) in Abhängigkeit der Daten einer Umfeldsensorik (10) Lenkungssteuerbefehle generiert, die durch die Leistungselektronik (4) in Ansteuersignale für den Elektromotor (5) umgesetzt werden, der dann die Mittel zur Einstellung eines Lenkwinkels ansteuert,
**dadurch gekennzeichnet, dass**
das Lenkungssteuergerät (2) derart ausgebildet ist, dass das Lenkungssteuergerät (2) in Abhängigkeit der Daten der Umfeldsensorik (10) einen aktuellen Lenkungssteuerbefehl (A₀) für einen Zeitpunkt t₀ und mindestens einen zukünftigen Lenkungssteuerbefehl (A₁) für einen Zeitpunkt t₁ generiert und an die Leistungselektronik (4) überträgt, wobei t₁>t₀ gilt, wobei die Leistungselektronik (4) einen Speicher (12) aufweist, in dem der mindestens eine zukünftige Lenkungssteuerbefehl (A₁) abgespeichert wird, wobei die Leistungselektronik (4) derart ausgebildet ist, dass bei einer Kommunikationsstörung zwischen dem Lenkungssteuergerät (2) und der Leistungselektronik (4) der mindestens eine zukünftige Lenkungssteuerbefehl (A₁) in Ansteuersignale für den Elektromotor (5) umgesetzt wird.

2. Lenksystem nach Anspruch 1, **dadurch gekennzeichnet, dass** das Lenksystem (1) eine Warneinrichtung (9) aufweist, die derart ausgebildet ist, dass bei einer Kommunikationsstörung eine Aufforderung zur Übernahme der Lenkung durch den Fahrer generiert wird.

3. Lenksystem nach Anspruch 2, **dadurch gekennzeichnet, dass** ein Übernahmezeitintervall definiert ist, innerhalb dessen ein Fahrer die Lenkung übernehmen muss, wobei die Anzahl der zukünftigen Lenkungssteuerbefehle derart gewählt wird, dass diese einen Zeitbereich größer/gleich dem Übernahmezeitintervall abdecken.

4. Lenksystem nach einem der vorangegangenen Ansprüche, **dadurch gekennzeichnet, dass** mindestens einem zukünftigen Lenkungssteuerbefehl (A₃, Aₙ₋₂) ein Zeitstempel (T₃, Tₙ₋₂) zugeordnet ist, wann dieser ausgeführt werden soll.

5. Lenksystem nach einem der vorangegangenen Ansprüche, **dadurch gekennzeichnet, dass** das Lenkungssteuergerät (2) derart ausgebildet ist, dass bei einer Übertragung von aktuellen und zukünftigen Lenkungssteuerbefehlen in einem Zyklus diese mit den Lenkungssteuerbefehlen in dem vorangegangenen Zyklus verglichen werden, wobei nur bei Abweichungen zu den bereits übermittelten Lenkungssteuerbefehlen der aktuelle und/ oder zukünftige Lenkungssteuerbefehl an die Leistungselektronik (4) übermittelt werden.

## Claims

1. Steering system (1) for the automated driving of a motor vehicle, wherein the steering system (1) comprises at least one steering control unit (2), power electronics (4), means for adjusting a steering angle and an electric motor (5), wherein the steering system (1) is implemented such that the steering control unit (2) generates steering control commands depending on the data of a surroundings sensor arrangement (10), which are converted by the power electronics (4) into actuation signals for the electric motor (5), which then actuates the means for adjusting a steering angle,
**characterized in that**
the steering control unit (2) is implemented such that depending on the data of the surroundings sensor arrangement (10), the steering control unit (2) generates a current steering control command (A₀) for a point in time t₀ and at least one future steering control command (A₁) for a point in time t₁ and transmits the commands to the power electronics (4), wherein t₁>t₀, wherein the power electronics (4) comprise a memory (12), in which the at least one future steering control command (A₁) is stored, wherein the power electronics (4) are implemented such that in the event of a communications disruption between the steering control unit (2) and the power electronics (4), the at least one future steering control command (A₁) is converted into actuation signals for the electric motor (5).

2. Steering system according to Claim 1, **characterized in that** the steering system (1) comprises a warning device (9) that is implemented such that in the event of a communications disruption, a request is generated to take over the steering by the driver.

3. Steering system according to Claim 2, **characterized in that** a takeover time interval is defined, within which a driver must take over the steering, wherein the number of future steering control commands is selected such as to cover a time range greater than or equal to the takeover time interval.

4. Steering system according to any one of the preceding claims, **characterized in that** a time stamp (T₃, Tₙ₋₂) indicating when a command is to be carried out is assigned to at least one future steering control command (A₃, Aₙ₋₂).

5. The steering system according to any one of the preceding claims, **characterized in that** the steering control unit (2) is implemented such that in the event of a transmission of current and future steering control commands in a cycle, said commands are compared with the steering control commands in the preceding cycle, wherein the current and/or future steering control command are only transmitted to the power electronics (4) if there are deviations from the already transmitted steering control commands.

## Revendications

1. Système de direction (1) destiné à la conduite automatisée d'un véhicule automobile, le système de direction (1) comprenant au moins une unité de commande de direction (2), une électronique de puissance (4), des moyens de réglage d'un angle de braquage et un moteur électrique (5), le système de direction (1) étant conçu de telle sorte que l'unité de commande de direction (2) génère, en fonction des données d'un système de détection d'environnement (10), des instructions de commande de direction qui sont converties par l'électronique de puissance (4) en signaux de commande du moteur électrique (5) qui commande ensuite les moyens de réglage de l'angle de braquage,
**caractérisé en ce que**
l'unité de commande de direction (2) est conçue de telle sorte que l'unité de commande de direction (2) génère une instruction de commande de direction actuelle (A₀) à un instant t₀ et au moins une instruction de commande de direction future (A₁) à un instant t₁, avec t₁ > t₀, en fonction des données du système de détection d'environnement (10) et les transmet à l'électronique de puissance (4), l'électronique de puissance (4) comportant une mémoire (12) dans laquelle l'au moins une instruction de commande de direction future (A₁) est mémorisée, l'électronique de puissance (4) étant conçue de telle sorte que, en cas d'une défaillance de communication entre l'unité de commande de direction (2) et l'électronique de puissance (4), l'au moins une instruction de commande de direction future (A₁) soit convertie en signaux de commande du moteur électrique (5) .

2. Système de direction selon la revendication 1, **caractérisé en ce que** le système de direction (1) comporte un moyen d'avertissement (9) qui est conçu de telle sorte que, en cas d'une défaillance de communication, une demande de reprise de la direction est générée par le conducteur.

3. Système de direction selon la revendication 2, **caractérisé en ce qu'**un intervalle de temps de reprise est défini dans lequel un conducteur doit reprendre la direction, le nombre d'instructions de commande de direction futures étant sélectionné de telle sorte que celles-ci couvrent une plage de temps supérieure ou égale à l'intervalle de temps de reprise.

4. Système de direction selon l'une des revendications précédentes, **caractérisé en ce qu'**un horodatage (T₃, Tₙ₋₂) est associé à au moins une instruction de commande de direction future (A₃, Aₙ₋₂) lorsque celle-ci doit être exécutée.

5. Système de direction selon l'une des revendications précédentes, **caractérisé en ce que** l'unité de commande de direction (2) est conçue de telle sorte que, lors d'une transmission d'instructions de commande de direction actuelles et futures dans un cycle, celles-ci soient comparées aux instructions de commande de direction du cycle précédent, l'instruction de commande de direction actuelle et/ou future étant transmise à l'électronique de puissance (4) uniquement en cas d'écarts avec les instructions de commande de direction déjà transmises.
